(19) 

Europäisches Patentamt
European Patent Office
Office européen des brevets

(11) **EP 4 218 665 A1**

(12) **EUROPEAN PATENT APPLICATION**
published in accordance with Art. 153(4) EPC

(43) Date of publication:
02.08.2023 Bulletin 2023/31

(21) Application number: 21872577.8

(22) Date of filing: 24.09.2021

(51) International Patent Classification (IPC):
A61C 13/083 (2006.01)    C04B 41/87 (2006.01)
C04B 41/89 (2006.01)    C04B 35/486 (2006.01)
A61C 5/77 (2017.01)

(52) Cooperative Patent Classification (CPC):
A61C 5/77; A61C 13/083; C04B 35/486;
C04B 41/87; C04B 41/89

(86) International application number:
PCT/JP2021/035170

(87) International publication number:
WO 2022/065448 (31.03.2022 Gazette 2022/13)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 25.09.2020 JP 2020161530

(71) Applicant: Kuraray Noritake Dental Inc.
Kurashiki-shi, Okayama 710-0801 (JP)

(72) Inventors:
• KATO, Shinichiro
Miyoshi-shi, Aichi 470-0293 (JP)
• MATSUMOTO, Atsushi
Miyoshi-shi, Aichi 470-0293 (JP)

(74) Representative: D Young & Co LLP
120 Holborn
London EC1N 2DY (GB)

(54) **TO-BE-PROCESSED BODY FOR DENTISTRY**

(57) The present invention provides a to-be-processed body for dentistry for preparing a dental prosthesis that faithfully reproduces a natural tooth as though dentin is present underneath enamel and influencing appearance when seen from a close distance, without requiring a complex structure or a complicated manufacturing process. The present invention relates to a to-be-processed body for dentistry for preparing a dental prosthesis, the to-be-processed body for dentistry satisfying $L3 > L1$ and $L3 > L2$ on a straight line extending along a first direction from one end P to the other end Q of the to-be-processed body for dentistry, where:
$L1$ is the final $L^*$ according to $L^*a^*b^*$ color system over a black background at a first point lying in an interval from said one end P to 25% of the entire length,
$L2$ is the final $L^*$ according to $L^*a^*b^*$ color system over a black background at a second point lying in an interval from said other end Q to 25% of the entire length, and
$L3$ is the final $L^*$ according to $L^*a^*b^*$ color system over a black background at a third point lying between the first point and the second point on a straight line connecting the first point to the second point.

FIG.1

EP 4 218 665 A1

**Description**

TECHNICAL FIELD

The present invention relates to a to-be-processed body for dentistry.

In recent years, there has been increasing use of a CAD/CAM system that makes use of a computer for designing and a milling machine for machining to fabricate dental prostheses such as inlays and crowns. In such a system, a suitably sized block of a shape such as a cuboid, a cylinder, or a disc is fed and set in a milling machine, and cut into a crown- or tooth-shaped restoration. Various types of block materials have been proposed, including, for example, zirconia, glass-ceramics, titanium, acrylic resins, and composite materials containing a polymer resin and an inorganic filler.

Among these materials, zirconia has been used for years as a frame material in dentistry by taking advantage of its high-strength characteristics, and recent improvements in the translucency of zirconia materials have led to increased production of zirconia-only dental prostheses. In the field of dentistry, zirconia materials are used as materials of frames by taking advantage of their high-strength characteristics. Earlier dental zirconia products were monochromatic; however, later studies in pursuit of higher aesthetics have created a variety of zirconia products having a layered structure. Patent Literatures 1 and 2 disclose three- or four-layered zirconia sintered bodies having different shades in different layers. These zirconia sintered bodies are described as being more similar in appearance to natural teeth than monochromatic zirconia sintered bodies.

Patent Literature 3 describes a laminated zirconia pre-sintered body that has incorporated a shell-shaped structure inside the pre-sintered body, similar to the structure of natural teeth. It is stated in this patent document that an appearance similar to natural teeth can be obtained by providing a structure similar to the structure of natural teeth (the transparent enamel covering the outer surface of the nontransparent dentin located inside the tooth).

CITATION LIST

Patent Literature

Patent Literature 1: WO2019/131782
Patent Literature 2: JP 2017-185163 A
Patent Literature 3: JP 2020-058648 A

SUMMARY OF INVENTION

Technical Problem

As discussed above, it has become increasingly popular to prepare zirconia-only dental prostheses, and a need exists for a dental prosthesis that shows excellent aesthetics and resembles natural teeth as closely as possible.

The zirconia described in Patent Literatures 1 and 2 can provide aesthetics more similar to natural teeth than monochromatic zirconia. For example, when applied to a front tooth, the zirconia of Patent Literature 1 provides aesthetics similar to natural teeth, with gradually darkening colors from the incisal to cervical region of the front tooth. However, the enamel of natural teeth is semi-transparent, and, because of the semi-transparency of enamel, the color (opaque white) of dentin influences the tooth appearance in the region of tooth where dentin is present underneath enamel (the region of tooth except for the incisal region), in contrast to the region (incisal region) where dentin is almost absent underneath enamel.

The zirconia described in Patent Literatures 1 and 2 is a layered structure with a plurality of horizontally laminated layers (plate- or film-like layers). Because this is fundamentally different from the structure of natural teeth, the zirconia described in Patent Literatures 1 and 2 cannot faithfully reproduce the look of natural teeth by providing the color of dentin as though dentin is seen through the enamel covering the dentin. That is, the zirconia described in Patent Literatures 1 and 2 needs further improvement with respect to providing the color of dentin as though dentin is seen through the enamel covering the dentin, because the zirconia of Patent Literatures 1 and 2, when used as a dental prosthesis, falls short in this respect when a person wearing the prosthesis is seen from a close distance (for example, 1 m or less, or a shorter distance of 50 cm or less; as seen in person or through a camera), though the dental prostheses of these patent documents can provide aesthetics when seen from a relatively far distance.

With the structural feature to more closely resemble the structure of natural teeth, Patent Literature 3 is intended to provide a dental prosthesis having high aesthetics comparable to natural teeth, in which the dentin present underneath enamel influences the tooth's appearance. However, because of the complex structure, the zirconia pre-sintered body described in Patent Literature 3 is more complicated than the simple laminate bodies (Patent Literatures 1 and 2) in terms of processes, and involves much higher costs of production. Another issue is procedural complexity, such as positioning of a workpiece, in processing the zirconia pre-sintered body into a crown shape, limiting the cases to which the zirconia pre-sintered body may be applicable.

Accordingly, there is a need for a to-be-processed body for dentistry for preparing a dental prosthesis that faithfully reproduces a natural tooth as though dentin is present underneath enamel and influencing appearance when seen from a close distance, without requiring a complex structure or a complicated manufacturing process.

Solution to Problem

In order to find a solution to the foregoing issues, the present inventors conducted intensive studies by focusing on the behavior of lightness (L*). The studies revealed that the above problems can be solved when L*, which conventionally showed a consistent pattern of decrease from the incisal region to the cervical region, is increased from the incisal region to the intermediate region, and decreased from the intermediate region to the cervical region in a multilayer structure having a layered structure of plate-like layers. The present invention was completed after further studies conducted on the basis of this finding.

Specifically, the present invention includes the following.

[1] A to-be-processed body for dentistry for preparing a dental prosthesis, the to-be-processed body for dentistry satisfying L3 > L1 and L3 > L2 on a straight line extending along a first direction from one end P to the other end Q of the to-be-processed body for dentistry, where:

L1 is the final L* according to L*a*b* color system over a black background at a first point lying in an interval from said one end P to 25% of the entire length,
L2 is the final L* according to L*a*b* color system over a black background at a second point lying in an interval from said other end Q to 25% of the entire length, and
L3 is the final L* according to L*a*b* color system over a black background at a third point lying between the first point and the second point on a straight line connecting the first point to the second point.

[2] The to-be-processed body for dentistry according to [1], wherein L3 - L1 is 0.2 or more and 5.0 or less, and L3 - L2 is 0.2 or more and 4.0 or less.
[3] The to-be-processed body for dentistry according to [1] or [2], wherein:

the final L* according to L*a*b* color system over a black background shows a pattern of increase from the first point toward the third point, and
the final L* according to L*a*b* color system over a black background shows a pattern of decrease from the third point toward the second point.

[4] The to-be-processed body for dentistry according to any one of [1] to [3], wherein:

there exists no interval in which the final L* according to L*a*b* color system over a black background decreases by 0.5 or more from the first point toward the third point, and
there exists no interval in which the final L* according to L*a*b* color system over a black background increases by 0.5 or more from the third point toward the second point.

[5] The to-be-processed body for dentistry according to any one of [1] to [4], wherein:

$$a1 < a3 < a2,$$

and

$$b1 < b3 < b2,$$

where:

a1 and b1 are the final a* and b*, respectively, at the first point according to L*a*b* color system over a black background,

a2 and b2 are the final a* and b*, respectively, at the second point according to L*a*b* color system over a black background, and

a3 and b3 are the final a* and b*, respectively, at the third point according to L*a*b* color system over a black background.

[6] The to-be-processed body for dentistry according to any one of [1] to [5], which is a multilayer structure comprising a layered structure of at least three layers of different com positions.

[7] The to-be-processed body for dentistry according to [6], wherein the multilayer structure is disc-shaped or prism-shaped.

[8] The to-be-processed body for dentistry according to [6] or [7], wherein said at least three layers of different compositions are a layer including the first point, a layer including the second point, and a layer including the third point.

[9] The to-be-processed body for dentistry according to any one of [1] to [8], which is a zirconia molded body or zirconia pre-sintered body comprising zirconia, and a stabilizer capable of reducing a phase transformation of zirconia.

[10] The to-be-processed body for dentistry according to [9], wherein the zirconia is predominantly monoclinic in crystal system.

[11] The to-be-processed body for dentistry according to [9] or [10], wherein at least a part of the stabilizer is not dissolved in zirconia as a solid solution.

[12] The to-be-processed body for dentistry according to any one of [1] to [11], which comprises at least two layers that are substantially the same in the content of the stabilizer relative to the total mole of the zirconia and the stabilizer.

[13] The to-be-processed body for dentistry according to [12], wherein the layers that are substantially the same in the content of the stabilizer all comprise a color component, and differ from one another in the composition of the color component.

[14] The to-be-processed body for dentistry according to any one of [9] to [13], which comprises at least two layers that differ from one another in the content of the stabilizer relative to the total mole of the zirconia and the stabilizer.

[15] The to-be-processed body for dentistry according to any one of [9] to [13], wherein the content of the stabilizer relative to the total mole of the zirconia and the stabilizer is substantially the same in all layers.

[16] The to-be-processed body for dentistry according to any one of [9] to [15], wherein the stabilizer is yttria.

[17] The to-be-processed body for dentistry according to [16], wherein:

the content of yttria in the layer including said one end P is 3.5 mol% or more and 6.5 mol% or less relative to the total mole of the zirconia and the yttria,

the content of yttria in the layer including said other end Q is 2.5 mol% or more and less than 4.5 mol% relative to the total mole of the zirconia and the yttria, and

the layer including said one end P has a higher yttria content than the layer including said other end Q.

Advantageous Effects of Invention

According to the present invention, a dental prosthesis can be provided that faithfully reproduces a natural tooth as though dentin is present underneath enamel and influencing appearance when seen from a close distance, without requiring a complex structure or a complicated manufacturing process.

BRIEF DESCRIPTION OF DRAWINGS

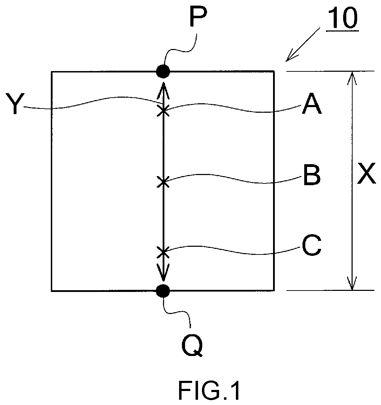

FIG. 1 is a schematic view of a to-be-processed body for dentistry.

DESCRIPTION OF EMBODIMENTS

A to-be-processed body for dentistry of the present invention is described below with reference to the schematic view shown in FIG. 1. In order to faithfully reproduce an appearance similar to that of natural teeth as though dentin is present underneath enamel and influencing appearance when a dental prosthesis is seen from a close distance, a to-be-processed body for dentistry of the present invention satisfies L3 > L1 and L3 > L2 on a straight line extending along a first direction Y from one end P to the other end Q of the to-be-processed body for dentistry 10 shown in FIG. 1, where:

L1 is the final L* according to L*a*b* color system over a black background at a first point A lying in an interval from said one end P to 25% of the entire length X,

L2 is the final L* according to L*a*b* color system over a black background at a second point C lying in an interval from said other end Q to 25% of the entire length X, and
L3 is the final L* according to L*a*b* color system over a black background at a third point B lying between the first point A and the second point C on a straight line connecting the first point A to the second point C.

In the present invention, the final L* means a value of L* being exhibited by a dental prosthesis fitted to a patient after being prepared by processing and firing the to-be-processed body for dentistry. Depending on the material of the to-be-processed body for dentistry, the final L* may be the same or different from the L* of the to-be-processed body itself. Details will be described in conjunction with the descriptions of the material of the to-be-processed body. In the present invention, L* representing lightness is a value over a black background. Instead of using a commonly used lightness value over a white background, the present invention uses a value over a black background to more accurately grasp the behavior of L*, and enable faithful reproduction of the appearance of natural teeth as though dentin is present underneath enamel and influencing appearance when a dental prosthesis is seen from a close distance (for example, 1 m or less, or 50 cm or less). The method of measurement of L* will be described in detail in the EXAMPLES section below.

The following describes the behavior of lightness (L*) for reproduction of an appearance similar to that of natural teeth. The structure of natural teeth is such that the nontransparent high-saturation dentin is located inside the tooth, and the transparent low-saturation enamel covers the outer surface of dentin. From the perspective of reproducing an appearance based on this structure with a horizontal multilayer structure (a multilayer structure with a layered structure of plate-like layers), detailed investigations were conducted by focusing on the lightness of each layer. When seen horizontally (cross section to cross section from the cervical to incisal region), a natural tooth is almost completely enamel at the uppermost portion (incisal region), and this portion of tooth has high translucency. In the corresponding uppermost layer of a multilayer structure, the appropriate value of L* in the uppermost layer over a black background was found to be relatively low (lower than in an intermediate layer). In the intermediate region of a natural tooth (the portion between the incisal region and the cervical region), enamel is present over the dentin located inside the tooth, and this portion of tooth has a lower translucency than the uppermost portion because of the inner dentin. In the corresponding intermediate layer of a multilayer structure, the appropriate value of L* in the intermediate layer over a black background was found to be higher than in the uppermost layer. The enamel covers the dentin also in the lowermost portion (cervical region) in the structure of natural teeth, as in the intermediate region. In the lowermost portion, however, the dentin is thicker, and influences the appearance of the lowermost portion (cervical region) of natural tooth, particularly in respect to saturation. As set out above, the dentin is thicker in the lowermost portion than in the intermediate portion, and the lowermost portion has a lower translucency than the intermediate portion because of the influence of dentin. In the corresponding lowermost layer of a multilayer structure, the appropriate value of L* in the lowermost layer over a black background was found to be lower than in the intermediate layer for reasons related to a combination of translucency and saturation. Because the incisal region of natural teeth is almost completely enamel and has high translucency, considerations were given to provide a high L* value in the uppermost layer of a multilayer structure over a black background. However, when the L* value of each layer over a black background is such that the uppermost layer has a relatively low L* value (lower than in the intermediate layer), and that the intermediate layer has a higher L* value than the uppermost layer, and the lowermost layer has a lower L* value than the intermediate layer, these L* values can together develop an appearance similar to that of natural teeth as though dentin is actually present underneath enamel and influencing appearance when a dental prosthesis obtained from the to-be-processed body for dentistry (multilayer structure) is seen from a close distance. That is, with the L* value of the multilayer structure over a black background showing a pattern of increase from the uppermost layer to the intermediate layer, and a pattern of decrease from the intermediate layer to the lowermost layer in the multilayer structure, the multilayer structure can develop an appearance similar to that of natural teeth as though dentin is present underneath enamel and influencing appearance when the multilayer structure is seen from a close distance.

In order to more faithfully reproduce an appearance similar to that of natural teeth as though dentin is present underneath enamel and influencing appearance when seen from a close distance, it is preferable in a to-be-processed body for dentistry of the present invention that L3 - L1 be 0.2 or more, more preferably 0.5 or more, even more preferably 0.7 or more. Preferably, L3 - L1 is 5.0 or less, more preferably 4.0 or less, even more preferably 3.0 or less. Preferably, L3 - L2 is 0.2 or more, more preferably 0.4 or more, even more preferably 0.6 or more. Preferably, L3 - L2 is 4.0 or less, more preferably 3.0 or less, even more preferably 2.5 or less. Because L1, L2, and L3 are varied taking into consideration the desired shade of dental prosthesis preferred by a patient, the values of L1, L2, and L3 are not particularly limited, as long as the foregoing relationships are satisfied. As an example, L1 is preferably 61 to 81, more preferably 63 to 79, even more preferably 66 to 76. L3 is preferably 64 to 83, more preferably 66 to 81, even more preferably 69 to 78. L2 is preferably 62 to 82, more preferably 64 to 80, even more preferably 67 to 77. In a to-be-processed body for dentistry of the present invention, the first point A relating to L1 corresponds to the incisal region, and the second point C relating to L2 corresponds to the cervical region.

In order to reproduce an appearance similar to that of natural teeth, it is preferable in a to-be-processed body for dentistry of the present invention that the final L* according to the L*a*b* color system over a black background show a pattern of increase from the first point A toward the third point B, and that, more preferably, there is no interval in which the final L* decreases by 0.5 or more, even more preferably 0.3 or more from the first point A toward the third point B in the continuous behavior of lightness from the first point A to the second point C. It is preferable that the final L* according to the L*a*b* color system over a black background show a pattern of decrease from the third point B toward the second point C, and that, more preferably, there is no interval in which the final L* increases by 0.5 or more, even more preferably 0.3 or more from the third point B toward the second point C.

In order to provide a shade similar to the shade of natural teeth, it is preferable in a to-be-processed body for dentistry of the present invention that a1 < a3 < a2, and b1 < b3 < b2, where a1 and b1 are the final a* and final b*, respectively, at the first point A according to the L*a*b* color system over a black background, a2 and b2 are the final a* and final b*, respectively, at the second point B according to the L*a*b* color system over a black background, and a3 and b3 are the final a* and final b*, respectively, at the third point B according to the L*a*b* color system over a black background. Because a1, a2, a3, b1, b2, and b3 are varied taking into consideration the desired shade of dental prosthesis preferred by a patient, the values of a1, a2, a3, b1, b2, and b3 are not particularly limited, as long as the foregoing relationships are satisfied. For example, a1 is preferably -4.5 to 2, more preferably -3.5 to 1.5, even more preferably -3.5 to 1. For example, a3 is preferably -4.5 to 3, more preferably -3.5 to 2, even more preferably -3.5 to 1.5. For example, a2 is preferably -4.5 to 4, more preferably -3.5 to 3, even more preferably -3.5 to 2.5. For example, b1 is preferably -2 to 17, more preferably -1 to 15, even more preferably -1 to 12. For example, b3 is preferably -1 to 23, more preferably 0 to 21, even more preferably 0 to 18. For example, b2 is preferably 1 to 25, more preferably 2 to 23, even more preferably 3 to 20.

The material of a to-be-processed body for dentistry of the present invention is not particularly limited, and may be, for example, zirconia, a glass-ceramic, alumina, an acrylic resin, or a composite material containing a polymer resin and an inorganic filler. As used herein, "final L*", "final a*", and "final b*" mean the values of L*, a*, and b*, respectively, being exhibited by a dental prosthesis fitted to a patient after preparation, and, depending on the material of the to-be-processed body for dentistry, may be the same or different from the L* of the to-be-processed body itself. For example, in the case of zirconia, "final L*", "final a*", and "final b*" mean the values of L*, a*, and b*, respectively, after sintering. In the case of glass-ceramics, which require a heat rearmament after machining, "final L*", "final a*", and "final b*" mean the values of L*, a*, and b*, respectively, after heat treatment.

A to-be-processed body for dentistry of the present invention is not particularly limited in having a layered structure. However, a to-be-processed body for dentistry of the present invention may be prepared as a multilayer structure having a layered structure of at least three layers of different compositions. In certain preferred embodiments, the multilayer structure may have a layered structure configured from layers that are substantially parallel to one another. By setting the L* of each layer to satisfy the foregoing relationships in such a layered structure configured from substantially plate-like layers, it is possible to faithfully reproduce a natural tooth as though dentin is present underneath enamel and influencing appearance when a dental prosthesis is seen from a close distance, without requiring a complex layer structure such as a shell shape. In such preferred embodiments, the layers of the multilayer structure are substantially plate-like layers, and the multilayer structure includes plate-like layers having some irregularities, provided that the present invention can exhibit its effects. At least three layers of different compositions may be a layer including the first point A, a layer including the second point C, and a layer including the third point C, and additional layers may be present between the layers, provided that the present invention can exhibit its effects. The number of substantially plate-like layers in the multilayer structure is not particularly limited, as long as it is 3 or more, and the multilayer structure may have 4 or more, or 5 or more substantially plate-like layers. The number of substantially plate-like layers in the multilayer structure may be 10 or less, though the number of layers is not particularly limited. In certain preferred embodiments, the multilayer structure having a layered structure has a three-layer structure, with a first layer including the first point A, a second layer including the third point B, and a third layer including the second point C. The thickness of each layer is not particularly limited. For example, the layers may have substantially the same thickness in a multilayer structure having a layered structure of three layers.

By "different compositions", it means that the layers are different in the presence or absence of any of the components of the layers, and/or in the content of the component. For example, the layers may differ only in the type of the color component used, or only in the content of the color component when the layers use the same color component. Alternatively, the layers may differ only in components added in trace amounts, or a layered structure including a plurality of layers having greatly different main components may be provided, as might be expected.

Preferably, a to-be-processed body for dentistry of the present invention comprises a color component. The color component is not particularly limited, as long as the present invention can exhibit its effects. Examples of the color component include a pigment, a complex pigment, a fluorescent agent, and an opalizer.

Examples of the pigment include an oxide of at least one element selected from the group consisting of Ti, V, Cr, Mn, Fe, Co, Ni, Zn, Y, Zr, Sn, Sb, Bi, Ce, Pr, Sm, Eu, Gd, Tb, and Er. Preferably, the pigment includes an oxide of at least one element selected from the group consisting of Ti, V, Cr, Mn, Fe, Co, Ni, Pr, Tb, and Er. Examples of the complex pigment include $(Zr,V)O_2$, $Fe(Fe,Cr)_2O_4$, $(Ni,Co,Fe)(Fe,Cr)_2O_4 \cdot ZrSiO_4$, and $(Co,Zn)Al_2O_4$. Preferably, the com-

plex pigment includes $(Zr,V)O_2$. Examples of the fluorescent agent include $Y_2SiO_5:Ce$, $Y_2SiO_5:Tb$, $(Y,Gd,Eu)BO_3$, $Y_2O_3:Eu$, YAG:Ce, $ZnGa_2O_4:Zn$, and $BaMgAl_{10}O_{17}:Eu$. Examples of the opalizer include zirconium silicate, tin oxide, zirconium oxide, zinc oxide, cerium oxide, titanium oxide ($TiO_2$), and aluminum oxide.

Preferably, a to-be-processed body for dentistry of the present invention is a zirconia molded body or zirconia pre-sintered body comprising zirconia, and a stabilizer capable of reducing a phase transformation of zirconia. By using zirconia as a material of the to-be-processed body for dentistry, the to-be-processed body for dentistry can exhibit excellent strength while having a translucency suited for dental prostheses. A zirconia molded body of the present invention is an unfired or unsintered molded body of zirconia. A zirconia molded body of the present invention may be partially-stabilized zirconia or fully stabilized zirconia. The term "unsintered" in the present invention refers to a state where reaction has not taken place at the areas of contact between zirconia powder particles. In the present invention, "zirconia pre-sintered body" is a block formed while zirconia particles (powder) are not fully sintered.

The stabilizer capable of reducing a phase transformation of zirconia is preferably one capable of forming partially-stabilized zirconia. Examples of the stabilizer include oxides such as calcium oxide (CaO), magnesium oxide (MgO), yttria (yttrium oxide; $Y_2O_3$), cerium oxide ($CeO_2$), scandium oxide ($Sc_2O_3$), niobium oxide ($Nb_2O_5$), lanthanum oxide ($La_2O_3$), erbium oxide ($Er_2O_3$), praseodymium oxide (PreOn), samarium oxide ($Sm_2O_3$), europium oxide ($Eu_2O_3$), and thulium oxide ($Tm_2O_3$). Preferably, the stabilizer is yttria. The stabilizer content in a zirconia pre-sintered body of the present invention and in a sintered body thereof can be measured using a technique, for example, such as inductively coupled plasma (ICP) emission spectral analysis, or x-ray fluorescence analysis. The stabilizer content in a zirconia pre-sintered body of the present invention and in a sintered body thereof is preferably 0.1 to 18 mol%, more preferably 1 to 15 mol%, even more preferably 1.5 to 10 mol% relative to the total mole of zirconia and stabilizer.

In view of achieving the shade, translucency, and strength suited for dental use (particularly, for use at a dental clinic), it is preferable that the zirconia in a to-be-processed body for dentistry of the present invention be predominantly monoclinic in crystal system when a to-be-processed body for dentistry of the present invention is a zirconia molded body or a zirconia pre-sintered body. In the present invention, "being predominantly monoclinic in crystal system" means that the fraction $f_m$ of the monoclinic crystal system of zirconia calculated from the mathematical expression (1) below is 50% or more relative to the total amount of all the crystal systems (monoclinic, tetragonal, and cubic) of the zirconia. In a zirconia molded body or zirconia pre-sintered body of the present invention, the fraction $f_m$ of the monoclinic crystal system in zirconia calculated from the mathematical expression (1) below is preferably 55% or more relative to the total amount of the monoclinic, tetragonal, and cubic crystal systems. In view of providing more suitable shade and translucency and superior strength for dental use (particularly, for use at a dental clinic), the fraction $f_m$ of the monoclinic crystal system is more preferably 60% or more, even more preferably 70% or more, yet more preferably 75% or more, particularly preferably 80% or more, still more preferably 85% or more, most preferably 90% or more. The fraction $f_m$ of monoclinic crystal system can be calculated from the mathematical expression (1) below, using peaks in an X-ray diffraction (XRD) pattern by $CuK\alpha$ radiation. Supposedly, the predominant crystal system of the zirconia molded body or zirconia pre-sintered body contributes to elevating the shrinkage temperature and reducing the firing time.

When a to-be-processed body for dentistry of the present invention is a zirconia molded body or zirconia pre-sintered body, the peaks for tetragonal and cubic crystal systems may be essentially undetectable. That is, the fraction $f_m$ of the monoclinic crystal system may be 100%.

[Math. 1]

$$f_m(\%) = \frac{I_m(111) + I_m(11-1)}{I_m(111) + I_m(11-1) + I_t(111) + I_c(111)} \times 100 \qquad (1)$$

In mathematical expression (1), $I_m(111)$ and $I_m(11-1)$ represent the peak intensities of the (111) plane and (11-1) plane, respectively, of the monoclinic crystal system of zirconia, It(111) represents the peak intensity of the (111) plane of the tetragonal crystal system of zirconia, and $I_c(111)$ represents the peak intensity of the (111) plane of the cubic crystal system of zirconia.

When a to-be-processed body for dentistry of the present invention is a zirconia molded body or zirconia pre-sintered body, it is preferable that the stabilizer be present so that at least a part of the crystal systems of zirconia is monoclinic. That is, it is preferable that at least a part of the stabilizer be not dissolved in zirconia as a solid solution. Whether a part of stabilizer is not dissolved in zirconia as a solid solution can be determined from an XRD pattern, for example. The presence of peaks derived from the stabilizer in an XRD pattern of the zirconia molded body or zirconia pre-sintered body means the presence of a stabilizer that is not dissolved in zirconia as a solid solution in the zirconia molded body or zirconia pre-sintered body. A peak derived from the stabilizer is basically not observable in the XRD pattern when the stabilizer is fully dissolved as a solid solution. It is, however, possible, depending on the crystal state or other conditions of the stabilizer, that the stabilizer is not dissolved in zirconia as a solid solution even when the XRD pattern does not show peaks for stabilizers. When the predominant crystal system of zirconia is tetragonal and/or cubic and there is no peak attributed to the stabilizer in the XRD pattern, the stabilizer can be thought of having dissolved in zirconia as a solid solution for the most part, basically completely. In the zirconia molded body or zirconia pre-sintered body, it is not required that the stabilizer be fully dissolved in zirconia as a solid solution. In the present invention, "stabilizer being dissolved as a solid solution" means that, for example, the elements (atoms) contained in the stabilizer are dissolved in zirconia as a solid solution.

In view of achieving the shade, translucency, and strength suited for dental use (particularly, for use at a dental clinic), it is preferable when a to-be-processed body for dentistry of the present invention is a zirconia molded body or zirconia pre-sintered body that the fraction $f_m$ of the monoclinic crystal system in zirconia calculated from the above mathematical expression (1) show an unchanging pattern of increase or decrease in layers having different stabilizer contents, from one end P to the other end Q of the zirconia molded body or zirconia pre-sintered body on a straight line extending along a first direction Y from one end P to the other end Q of the zirconia molded body or zirconia pre-sintered body. In other words, it is preferable that the fraction $f_m$ of the monoclinic crystal system in zirconia monotonously increase or decrease. In view of achieving the shade, translucency, and strength suited for dental use (particularly, for use at a dental clinic), it is preferable in certain embodiments that the fraction $f_m$ of the monoclinic crystal system in zirconia, in relation to stabilizer content, be in a pattern of increase on a straight line from one end P to the other end Q when the stabilizer content is in a pattern of decrease on a straight line from one end P to the other end Q.

A to-be-processed body for dentistry of the present invention, when it is a zirconia molded body or zirconia pre-sintered body, preferably comprises at least two layers that differ from one another in the content of the stabilizer relative to the total mole of zirconia and stabilizer (hereinafter, also referred to simply as "layers having different stabilizer contents"). The number of layers having different stabilizer contents is not particularly limited, as long as it is 2 or more. The number of layers having different stabilizer contents may be 3 or 4, or may be 5 or more. A to-be-processed body for dentistry of the present invention, when it is a zirconia molded body or zirconia pre-sintered body, preferably comprises at least two layers having substantially the same stabilizer content relative to the total mole of zirconia and stabilizer (hereinafter, also referred to simply as "layers having substantially the same stabilizer content"). Here, "having substantially the same stabilizer content" means that the difference of stabilizer content between layers is preferably less than 0.1 mol%, more preferably less than 0.05 mol%, even more preferably less than 0.03 mol%. A certain preferred embodiment of the to-be-processed body for dentistry when it is a zirconia molded body or zirconia pre-sintered body is, for example, a to-be-processed body for dentistry that is a multilayer structure comprising a layered structure of at least three layers (for example, 3 to 6 layers) of different compositions, and in which each layer in the layered structure contains zirconia and a stabilizer capable of reducing a phase transformation of zirconia, and the stabilizer content relative to the total mole of zirconia and stabilizer is the same for all layers. Preferably, the layers having substantially the same stabilizer content all contain a color component, and differ from one another in the composition of the color component. By comprising layers having different stabilizer contents and layers having substantially the same stabilizer content, and with the layers having substantially the same stabilizer content all containing a color component and differing from one another in the composition of the color component, a to-be-processed body for dentistry of the present invention, when it is a zirconia molded body or zirconia pre-sintered body, can achieve L3 > L1 and L3 > L2, enabling faithful reproduction of an appearance similar to that of natural teeth as though dentin is actually present underneath enamel and influencing appearance.

The following describes the behavior of lightness (L*) in a zirconia sintered body in more detail, taking yttria as an example of the stabilizer. In a zirconia sintered body having a layered structure, the layer transmittance decreases, and the lightness (L*) over a black background increases with decrease of the yttria content in the layers. When zirconia (zirconia molded body or zirconia pre-sintered body) having the same yttria content is used (for example, 2.5 mol% or more and 6.5 mol% or less, preferably 3.0 mol% or more and 6.0 mol% or less), the lightness (L*) basically decreases by adding increased amounts of pigment. That is, the lightness (L*) of the intermediate layer can increase relative to the lightness of the uppermost layer when the content of yttria contained together with the base zirconia is decreased from the uppermost layer (the incisal region side) toward the intermediate layer. In addition, the lightness (L*) can decrease from the intermediate layer toward the lowermost layer (the cervical region side) when the content of yttria contained together with the base zirconia is the same from the intermediate layer to the lowermost layer (the cervical region side), or when a pigment is added in increasing amounts from the intermediate layer to the lowermost layer with a decrease of yttria content kept as small as possible. By setting the lightness (L*) of each layer in this fashion, it is possible to faithfully reproduce an appearance similar to that of natural teeth as though dentin is present underneath enamel and influencing appearance when seen from a close distance. The composition of each layer can be appropriately adjusted to achieve the L* behavior as intended by the present invention, other than by changing the yttria content or the added amount of pigment for each layer in the manner described above. For example, it is possible to reproduce the L* behavior as intended by the present invention by appropriately adjusting the pigment and the opalizer.

As used herein, "differing from one another in the composition of a color component" also applies when the layers differ only in the type of color component or when the layers differ only in the content of color component, or when the layers differ both in the type of color component and the content of color component. The color component may be contained in at least one of the layers of the zirconia molded body or zirconia pre-sintered body. With a zirconia molded body or zirconia pre-sintered body comprising layers having different stabilizer contents and layers having the same stabilizer content and differing in the amount of color component, it is possible to appropriately set the translucency, shade, and strength required in different portions (layers) of the same material in a zirconia sintered body obtained. The thickness of each layer is not particularly limited, and may be about 0.5 mm to 3 cm.

When a to-be-processed body for dentistry of the present invention is a zirconia molded body or zirconia pre-sintered body, there may be some overlap between layers having different stabilizer contents and layers having substantially the same stabilizer content. The following describes specific examples. A certain preferred embodiment (X-1) is, for example, a zirconia pre-sintered body that comprises a layered structure of three layers containing zirconia and a stabilizer capable of reducing a phase transformation of zirconia, and in which the zirconia is predominantly monoclinic in crystal system, and a first layer and a second layer have different stabilizer contents, and the second layer and a third layer have substantially the same stabilizer content. Another preferred embodiment (X-2) is, for example, a zirconia pre-sintered body that comprises a layered structure of four layers containing zirconia and a stabilizer capable of reducing a phase transformation of zirconia, and in which the zirconia is predominantly monoclinic in crystal system, and a first layer, a second layer, and a third layer have different stabilizer contents, and the third layer and a fourth layer have substantially the same stabilizer content. Another preferred embodiment (X-3) is, for example, a zirconia pre-sintered body that comprises a layered structure of four layers containing zirconia and a stabilizer capable of reducing a phase transformation of zirconia, and in which the zirconia is predominantly monoclinic in crystal system, and a first layer and a second layer have different stabilizer contents, and the second layer, a third layer, and a fourth layer have substantially the same stabilizer content. Yet another preferred embodiment (X-4) is, for example, a zirconia pre-sintered body that comprises a layered structure of at least three layers (for example, 3 to 6 layers, preferably 3 or 4 layer) containing zirconia and a stabilizer capable of reducing a phase transformation of zirconia, and in which the zirconia is predominantly monoclinic in crystal system, and all layers have substantially the same stabilizer content relative to the total mole of zirconia and stabilizer. As described above, it is preferable in the preferred embodiments (X-1) to (X-4) that the layers having substantially the same stabilizer content contain a color component, and differ from one another in the composition of the color component. In a zirconia pre-sintered body of the present invention, it is preferable when layers having different stabilizer contents are present that the layer having the highest stabilizer content be a layer that is present at an end face. For example, when the to-be-processed body for dentistry 10 of FIG. 1 is a zirconia molded body or pre-sintered body, the layer having the highest stabilizer content may be a layer including one end P on a straight line extending along a first direction Y from one end P to the other end Q of the to-be-processed body for dentistry 10. In view of obtaining a suitable shade for dental use, a certain preferred embodiment may be, for example, a zirconia pre-sintered body comprising a layered structure that includes only one layer having the highest stabilizer content. When a to-be-processed body for dentistry of the present invention is a zirconia molded body or zirconia pre-sintered body, the layer having the highest stabilizer content may contain a color component. When the layer having the highest stabilizer content is containing a color component, it is preferable that the composition of the color component contained in this layer differ from the compositions of the color components contained in the other layers.

In view of achieving the shade, translucency, and strength suited for dental use, it is preferable when a to-be-processed body for dentistry of the present invention is a zirconia molded body or zirconia pre-sintered body that the stabilizer (preferably, yttria) content relative to the total mole of zirconia and stabilizer, overall, show an unchanging pattern of increase or decrease from one end P to the other end Q of the zirconia pre-sintered body on a straight line extending along a first direction Y from one end P to the other end Q of the zirconia pre-sintered body, even with a plurality of layers having the same stabilizer (preferably, yttria) content. In other words, it is preferable that the stabilizer (preferably, yttria) content monotonously increase or decrease. This is described below with reference to FIG. 1 showing a schematic view of a to-be-processed body for dentistry. When the to-be-processed body for dentistry 10 of FIG. 1 is a zirconia molded body or zirconia pre-sintered body, it is preferable that the pattern of increase or decrease of stabilizer content do not change in the opposite direction on a straight line extending along a first direction Y from one end P to the other end Q of the to-be-processed body for dentistry 10. Specifically, when the stabilizer content is in a pattern of decrease on a straight line from one end P to the other end Q, it is preferable that there exist no interval in which the stabilizer content essentially increases, even with a plurality of layers having the same stabilizer (preferably, yttria) content.

When a to-be-processed body for dentistry of the present invention is a zirconia molded body or zirconia pre-sintered body, the stabilizer is preferably yttria in view of the strength and translucency of a zirconia sintered body made from the zirconia molded body or zirconia pre-sintered body The following describes an embodiment in which the stabilizer is yttria. When the to-be-processed body for dentistry 10 of FIG. 1 is a zirconia molded body or pre-sintered body, the yttria content in the layer including one end P of the to-be-processed body for dentistry 10 is preferably 3.5 mol% or more, more preferably 3.7 mol% or more, even more preferably 3.8 mol% or more, particularly preferably 4.0 mol% or more, and is preferably 6.5 mol% or less, more preferably 6.0 mol% or less, even more preferably 5.8 mol% or less, particularly preferably 5.5 mol% or less, relative to the total mole of zirconia and yttria. With a yttria content of 3.5 mol% or more and 6.5 mol% or less in the layer including one end P, the zirconia sintered body can have an increased translucency, appropriate for the incisal region of a dental prosthesis. When the to-be-processed body for dentistry 10 is a zirconia molded body or pre-sintered body, the yttria content of the layer including the other end Q of the to-be-processed body for dentistry 10 is preferably 2.5 mol% or more, more preferably 3.0 mol% or more, even more preferably 3.3 mol% or more, particularly preferably 3.5 mol% or more, and is preferably less than 4.5 mol%, more preferably 4.2 mol% or less, even more preferably 4.1 mol% or less, particularly preferably 4.0 mol% or less, relative to the total mole of zirconia and yttria. With a yttria content of 2.5 mol% or more and less than 4.5 mol% in the layer including the other end Q, the zirconia sintered body can have an increased strength, appropriate for the cervical region of a dental prosthesis. With a yttria content of 2.5 mol% or more and less than 4.5 mol% in the layer including the other end Q, the translucency does not overly increase, and the zirconia sintered body can show a translucency appropriate for the cervical region of a dental prosthesis. In view of providing layers having L* values over a black background that can together enable faithful reproduction of a natural tooth as though dentin is present underneath enamel and influencing appearance when seen from a close distance, it is preferable that the layer including one end P have a higher yttria content than the layer including the other end Q. In other words, it is preferable that (yttria content in the layer including one end P)/(yttria content in the layer including the other end Q) > 1. Between the layer including one end P and the layer including the other end Q, a to-be-processed body for dentistry of the present invention, when it is a zirconia molded body or zirconia pre-sintered body, comprises at least one layer as an intermediate layer having a different yttria content from the yttria content of either of the layer including one end P and the layer including the other end Q. In this way, the translucency gradually makes a transition from the cervical region to the incisal region, and the to-be-processed body for dentistry can show a translucency comparable to that of natural teeth. It is more preferable in layers having different yttria contents that the yttria content relative to the total mole of zirconia and yttria show an unchanging pattern of increase or decrease from one end P to the other end Q of the zirconia pre-sintered body on a straight line extending along a first direction Y from one end P to the other end Q of the zirconia pre-sintered body, and that the yttria content of each layer fall within predetermined ranges.

When a to-be-processed body for dentistry of the present invention is a zirconia molded body or zirconia pre-sintered body, the yttria content relative to the total mole of zirconia and yttria has a difference of preferably 3.0 mol% or less, more preferably 2.5 mol% or less, even more preferably 2.0 mol% or less between the layer including one end P of the to-be-processed body for dentistry 10 and the layer including the other end Q of the to-be-processed body for dentistry 10. The difference of yttria content is preferably 0.3 mol% or more, more preferably 0.5 mol% or more, even more preferably 1.0 mol% or more. With a yttria content difference of 3.0 mol% or less between the layer including one end P of the to-be-processed body for dentistry 10 and the layer including the other end Q of the to-be-processed body for dentistry 10, a dental prosthesis made from the to-be-processed body for dentistry 10 does not show an overly large translucency difference between the incisal region and the cervical region, and can exhibit a translucency appropriate as a dental prosthesis. With a yttria content difference of 3.0 mol% or less, the difference between the firing shrinkage rate of the layer including one end P and the firing shrinkage rate of the layer including the other end Q can be confined within 0.3%, and cracking and deformation can be prevented in making a dental prosthesis from the to-be-processed body for dentistry 10. When a to-be-processed body for dentistry of the present invention is a zirconia molded body or zirconia pre-sintered body, at least one layer having a different yttria content from the yttria content of either of the layer including one end P and the layer including the other end Q is provided as an intermediate layer between the layer including one end P and the layer including the other end Q. The difference of yttria content between the intermediate layer and the layer having a different yttria content from the intermediate layer (for example, the layer including one end P, or the layer including the other end Q) is preferably 2.0 mol% or less, more preferably 1.5 mol% or less, even more preferably 1.0 mol% or less. The yttria content difference is preferably 0.1 mol% or more, more preferably 0.3 mol% or more, even more preferably 0.5 mol% or more.

When a to-be-processed body for dentistry of the present invention is a zirconia molded body or zirconia pre-sintered body, the percentage presence $f_y$ of yttria not dissolved in zirconia as a solid solution (hereinafter, also referred to as "undissolved yttria") can be calculated using the following mathematical expression (2).
[Math. 2]

$$f_y(\%) = \frac{I_y(111)}{I_y(111) + I_m(111) + I_m(11-1) + I_t(111) + I_c(111)} \times 100 \qquad (2)$$

In mathematical expression (2), $I_y(111)$ represents the peak intensity of the (111) plane of yttria near 2θ = 29° in an XRD pattern by CuKα radiation, $I_m(111)$ and $I_m(11-1)$ represent the peak intensities of the (111) plane and (11-1) plane, respectively, of the monoclinic crystal system of zirconia, $I_t(111)$ represents the peak intensity of the (111) plane of the tetragonal crystal system of zirconia, and $I_c(111)$ represents the peak intensity of the (111) plane of the cubic crystal system of zirconia.

When a to-be-processed body for dentistry of the present invention is a zirconia molded body or zirconia pre-sintered body, it is preferable in view of providing more suitable shade and translucency and superior strength for dental use (particularly, for use at a dental clinic) that the percentage presence $f_y$ of undissolved yttria be more than 0%, more preferably 1% or more, even more preferably 2% or more. The percentage presence $f_y$ of undissolved yttria may be, for example, 13% or less. However, the upper limit of percentage presence $f_y$ preferably depends on the yttria content of the zirconia molded body or zirconia pre-sintered body. The percentage presence $f_y$ may be 13% or less in the layer including one end P of the to-be-processed body for dentistry 10 of FIG. 1, that is, a layer having a yttria content of 3.5 mol% or more and 6.5 mol% or less. The percentage presence $f_y$ may be 7% or less in the layer including the other end Q of the to-be-processed body for dentistry 10 of FIG. 1, that is, a layer having a yttria content of 2.5 mol% or more and less than 4.5 mol%. The percentage presence $f_y$ is preferably 1% or more, more preferably 2% or more, even more preferably 3% or more in the layer including one end P of the to-be-processed body for dentistry 10 of FIG. 1, that is, a layer having a yttria content of 3.5 mol% or more and 6.5 mol% or less. The percentage presence $f_y$ is preferably 0.5% or more, more preferably 1% or more, even more preferably 2% or more in the layer including the other end Q of the to-be-processed body for dentistry 10 of FIG. 1, that is, a layer having a yttria content of 2.5 mol% or more and less than 4.5 mol%.

By substituting $I_y(111)$ for other peaks, the mathematical expression (2) can be used to calculate the percentage presence of an undissolved fraction of a stabilizer other than yttria.

When a to-be-processed body for dentistry of the present invention is a zirconia molded body or zirconia pre-sintered body, it is preferable in view of achieving the shade, translucency, and strength suited for dental use (particularly, for use at a dental clinic) that the percentage presence $f_y$ of undissolved yttria in the zirconia molded body or zirconia pre-sintered body calculated by the above mathematical expression (2) show an unchanging pattern of increase or decrease in layers having different yttria contents, from one end to the other end of the zirconia pre-sintered body on a straight line extending along a first direction from one end to the other end of the zirconia pre-sintered body. In other words, it is preferable that the yttria content monotonously increase or decrease, and the percentage presence $f_y$ of undissolved yttria in the zirconia molded body or zirconia pre-sintered body monotonously increase or decrease in layers having different yttria contents. This is described below with reference to FIG. 1 showing a schematic view of a to-be-processed body for dentistry. It is preferable in layers having different yttria contents that the pattern of increase or decrease of the percentage presence $f_y$ of undissolved yttria in the zirconia molded body or zirconia pre-sintered body do not change in the opposite direction on a straight line extending along a first direction Y from one end P to the other end Q of the to-be-processed body for dentistry 10 shown in FIG. 1. Specifically, when the percentage presence $f_y$ of undissolved yttria in the zirconia molded body or zirconia pre-sintered body is in a pattern of decrease with the yttria content monotonously increasing or decreasing on a straight line from one end P to the other end Q, it is preferable in layers having different yttria contents that there exist no interval in which the percentage presence $f_y$ of undissolved yttria in the zirconia molded body or zirconia pre-sintered body essentially increases. In view of achieving the shade, translucency, and strength suited for dental use (particularly, for use at a dental clinic), it is preferable in certain embodiments that the fraction $f_m$ of the monoclinic crystal system in zirconia, in relation to stabilizer content, be in a pattern of increase on a straight line from one end P to the other end Q when the percentage presence $f_y$ of undissolved yttria in the zirconia pre-sintered body is in a pattern of decrease on a straight line from one end P to the other end Q in layers having different yttria contents.

In connection with the above descriptions based on the schematic view of FIG. 1, it is preferable in the present invention that, when the to-be-processed body for dentistry has a circular disc shape or a hexahedral shape such as a cuboid, "one end" refer to a point on the top face, and "other end" refer to a point on the bottom face (base). The point may be a point on the end face, or a point on a cross section.

In the present invention, "first direction from one end to the other end" means a direction in which the L* value changes. For example, "first direction" is preferably the direction of lamination of a powder in the production method described below.

A to-be-processed body for dentistry of the present invention, when it is a zirconia molded body or zirconia pre-sintered body, may comprise additives other than the zirconia, stabilizer, and color component, provided that the present invention can exhibit its effects. The layer having the highest stabilizer content may or may not contain a color component. Examples of the additives include alumina ($Al_2O_3$), titanium oxide ($TiO_2$), and silica ($SiO_2$).

A to-be-processed body for dentistry of the present invention, when it is a zirconia pre-sintered body, can be made by a process in which a zirconia molded body formed of a raw material powder containing zirconia particles, a stabilizer, and a color component is fired (or pre-sintered) at a temperature that does not sinter the zirconia particles (pre-sintering step). The layer having the highest stabilizer content may or may not contain a color component. The zirconia molded body is not particularly limited, and can be produced by a known method (for example, press forming), using a raw material powder containing zirconia particles and a stabilizer. In order to ensure block formation, the pre-sintering temperature is, for example, preferably 800°C or more, more preferably 900°C or more, even more preferably 950°C or more. For increased dimensional accuracy, the firing temperature is, for example, preferably 1,200°C or less, more preferably 1,150°C or less, even more preferably 1,100°C or less. That is, the firing temperature in a method of production of a zirconia pre-sintered body of the present invention is preferably 800°C to 1,200°C. Conceivably, dissolution of the stabilizer as a solid solution does not proceed with the firing temperature confined in these ranges.

A zirconia pre-sintered body of the present invention has a flexural strength of preferably 15 MPa or more, in order to provide the strength that allows mechanical working. For easier mechanical working, a zirconia pre-sintered body of the present invention has a flexural strength of preferably 70 MPa or less, more preferably 60 MPa or less. Such a flexural strength can be obtained by pre-sintering the zirconia molded body.

The flexural strength can be measured in compliance with ISO 6872:2015. For measurement, a specimen measuring 5 mm × 10 mm × 50 mm is used under the same conditions except for size. For surface finishing, the specimen surfaces, including the chamfered surface, are finished longitudinally with #600 sandpaper. The specimen is disposed in such an orientation that its widest face is perpendicular to the vertical direction (loading direction). In the flexure test, measurements are made at a span length of 30 mm with a crosshead speed of 0.5 mm/min.

A to-be-processed body for dentistry of the present invention may be a molded body having a predetermined shape. For example, the zirconia molded body or zirconia pre-sintered body may have a shape of a disc (circular disc) or a prism (for example, cuboidal).

When a to-be-processed body for dentistry of the present invention is a zirconia molded body or zirconia pre-sintered body, a zirconia sintered body can be obtained by using the method of production below. A zirconia sintered body can be made by firing a zirconia pre-sintered body at a temperature that sinters the zirconia particles (sintering step). The firing temperature in the sintering step is, for example, preferably 1,400°C or more, more preferably 1,450°C or more. The firing temperature is, for example, preferably 1,650°C or less, more preferably 1,600°C or less. The rate of temperature increase and the rate of temperature decrease are preferably 300°C/min or less. That is, it is preferable in a method of production of a zirconia sintered body of the present invention that the zirconia pre-sintered body be fired at a highest firing temperature of 1,400°C to 1,650°C.

In the sintering step, the retention time at the sinterable temperature (for example, highest firing temperature) is not particularly limited, as long as the present invention can exhibit its effects, and may be, for example, 120 minutes. When the zirconia in the zirconia molded body or zirconia pre-sintered body is predominantly monoclinic in crystal system, the retention time at the sinterable temperature may be, for example, less than 120 minutes, 90 minutes or less, 60 minutes or less, 30 minutes or less, or 15 minutes or less. With a short firing time, it is possible to increase production efficiency, and reduce the energy cost.

The rate of temperature increase and the rate of temperature decrease in the sintering step are not particularly limited, as long as the present invention can exhibit its effects. However, these are preferably set so as to reduce the time required for the sintering step. For example, the rate of temperature increase can be set so as to bring the firing temperature to the highest firing temperature in as short a time period as possible, depending on the performance of the furnace. The rate of temperature increase to the highest firing temperature may be, for example, 10°C/min or more, 50°C/min or more, 100°C/min or more, 120°C/min or more, 150°C/min or more, or 200°C/min or more. Preferably, the rate of temperature decrease is set to a rate that does not cause cracks or other defects in the sintered body. For example, the sintered body may be allowed to cool at room temperature after being heated. Here, the highest firing temperature means the highest temperature reached in the sintering step.

A to-be-processed body for dentistry of the present invention can be suitably used as a dental product. Examples of dental products include copings, frameworks, crowns, crown bridges, abutments, implants, implant screws, implant fixtures, implant bridges, implant bars, brackets, denture bases, inlays, onlays, orthodontic wires, and laminate veneers. The method of producing these dental products can be appropriately selected depending on use. For example, when a to-be-processed body for dentistry of the present invention is a zirconia molded body or zirconia pre-sintered body, a dental product can be obtained by sintering after machining. Preferably, a CAD/CAM system is used for machining.

The present invention encompasses embodiments combining the foregoing features, provided that the present invention can exhibit its effects with such combinations made in various forms within the technical idea of the present invention.

EXAMPLES

The following describes the present invention in greater detail by way of Examples. It should be noted, however, that the present invention is in no way limited by the following Examples, and various changes may be made by a person with ordinary skill in the art within the technical idea of the present invention.

Preparation of Zirconia Pre-Sintered Body

Zirconia pre-sintered bodies were prepared as to-be-processed bodies for dentistry of Examples and Comparative Examples, using the following procedures.

The raw material powders used to prepare zirconia pre-sintered bodies of Examples 1 to 5 and Comparative Examples 1 and 2 were prepared as follows. First, a zirconia powder of a monoclinic crystal system and a yttria powder were used to prepare a mixture in the compositions shown in Table 1. The mixture was added to water to prepare a slurry, and the slurry was mixed and pulverized to an average particle diameter of 0.13 $\mu$m or less by wet pulverization with a ball mill. After pulverization, the slurry was dried with a spray dryer, and the resulting powder was fired at 950°C for 2 hours to prepare a powder (primary powder). The average particle diameter can be determined by a laser diffraction scattering method. As a specific example of a laser diffraction scattering method, a 0.2% aqueous solution of sodium hexametaphosphate may be used as a dispersion medium for the measurement of average particle diameter by volume, using a laser diffraction particle size distribution analyzer (SALD-2300, manufactured by Shimadzu Corporation).

A color component (a pigment, an opalizer (TiO$_2$)) was added to the primary powder in the compositions shown in Table 1. After adding the color component, the powder was added to water to prepare a slurry, and the slurry was mixed and pulverized to an average particle diameter of 0.13 $\mu$m or less by wet pulverization with a ball mill. After adding a binder to the pulverized slurry, the slurry was dried with a spray dryer to prepare a powder (secondary powder). The secondary powder was used as a raw material powder for the production of a zirconia pre-sintered body, as described below.

The following describes a method of production of a zirconia pre-sintered body. First, the raw material powders were filled into a 20 mm $\times$ 25 mm die (inside dimensions) in the order shown in Table 1 to form each layer, and pressed at a surface pressure of 300 kg/cm$^2$ for 90 seconds with a uniaxial pressing machine (primary pressing) to obtain a primary press-molded body. The molded body after primary pressing was then subjected to CIP molding at 1,700 kg/cm$^2$ for 5 minutes to prepare a molded body having a layered structure. For each layer, 7.5 g of raw material powder was filled in Example 4 in which the molded body is a multilayer structure having a layered structure of four layers, 10 g of raw material powder was filled in Examples 1 to 3 and 5 and Comparative Example 1 in which the molded body is a multilayer structure having a layered structure of three layers, and 30 g of raw material powder was filled in Comparative Example 2 in which the molded body is a monolayer structure. The molded body was fired at 1,000°C for 2 hours to prepare a zirconia pre-sintered body.

[Table1]

| | | Amount of yttria added (mol%) | Amount of pigment added (mass%) | | Amount of TiO$_2$ added (mass%) | Shade evaluation of zirconia sintered body | | | |
|---|---|---|---|---|---|---|---|---|---|
| | | | NiO | (Zr,V) O$_2$ | | L* | a* | b* | Visual inspection |
| Example 1 | Layer 1 | 5.0 | 0.012 | 0.025 | - | 72.5 | -1.9 | 10.5 | Good |
| | Layer 2 | 4.0 | 0.018 | 0.048 | - | 73.8 | -1.6 | 14.5 | |
| | Layer 3 | 4.0 | 0.024 | 0.064 | - | 71.5 | -0.2 | 16.2 | |
| Example 2 | Layer 1 | 5.0 | 0.012 | 0.020 | - | 72.0 | -1.6 | 11.5 | Good |
| | Layer 2 | 4.0 | 0.015 | 0.021 | - | 73.3 | -1.3 | 12.0 | |
| | Layer 3 | 4.0 | 0.023 | 0.035 | - | 70.7 | -0.2 | 14.2 | |
| Example 3 | Layer 1 | 5.0 | 0.006 | 0.009 | - | 75.1 | -2.4 | 6.4 | Good |
| | Layer 2 | 4.0 | 0.009 | 0.023 | - | 76.0 | -2.3 | 10.8 | |
| | Layer 3 | 4.0 | 0.015 | 0.040 | - | 74.3 | -1.6 | 13.8 | |

(continued)

| | | Amount of yttria added (mol%) | Amount of pigment added (mass%) | | Amount of TiO$_2$ added (mass%) | Shade evaluation of zirconia sintered body | | | |
|---|---|---|---|---|---|---|---|---|---|
| | | | NiO | (Zr,V)O$_2$ | | L* | a* | b* | Visual inspection |
| Example 4 | Layer 1 | 6.0 | 0.012 | 0.020 | - | 70.8 | -2.1 | 10.5 | Good |
| | Layer 2 | 5.0 | 0.017 | 0.035 | - | 72.0 | -1.6 | 14.0 | |
| | Layer 3 | 4.0 | 0.020 | 0.042 | - | 71.2 | -0.7 | 15.2 | |
| | Layer 4 | 4.0 | 0.024 | 0.049 | - | 70.2 | -0.1 | 16.2 | |
| Example 5 | Layer 1 | 6.0 | 0.024 | 0.030 | | 70.5 | -0.1 | 11.8 | Good |
| | Layer 2 | 6.0 | 0.031 | 0.077 | 1.5 | 71.8 | 0.9 | 15.8 | |
| | Layer 3 | 6.0 | 0.042 | 0.092 | 1.5 | 69.8 | 1.8 | 16.5 | |
| Comparative Example 1 | Layer 1 | 5.0 | 0.009 | 0.014 | - | 76.0 | -1.7 | 9.0 | Moderate |
| | Layer 2 | 5.0 | 0.012 | 0.019 | - | 75.5 | -1.4 | 10.3 | |
| | Layer 3 | 5.0 | 0.014 | 0.022 | - | 74.8 | -1.0 | 11.1 | |
| Comparative Example 2 | Layer 1 | 5.0 | 0.011 | 0.025 | - | 75.1 | -2.0 | 10.4 | Poor |

Aesthetic Evaluation of Zirconia Sintered Body

The zirconia pre-sintered body of each Example and Comparative Example was used to prepare a zirconia sintered body by the method below, and the zirconia sintered body was visually evaluated for aesthetic quality in comparison to the appearance of natural teeth. A commercially available shade guide providing shades similar to the shades of natural teeth can be used for evaluation. A specific example of such a commercially available shade guide is the VITA Classical shade guide manufactured by VITA under this trade name.

The zirconia pre-sintered body of each Example and Comparative Example prepared by using the above method was machined into a crown shape for front teeth, using a CAD/CAM system (KATANA® CAD/CAM system; Kuraray Noritake Dental Inc.). After machining, the zirconia pre-sintered body was fired at 1,550°C for 120 minutes to prepare a zirconia sintered body. The zirconia sintered bodies all had a length (thickness) of about 8 mm along the direction of lamination. The crown-shaped zirconia sintered bodies for front teeth were evaluated by visual inspection, using the following criteria. The zirconia sintered bodies were determined as satisfying any of the following criteria when at least three out of four testers made the same judgment. The results are presented in Table 1. For visual inspection, the zirconia sintered bodies were observed 30 cm away from the eyes of an observer.

Evaluation criteria

Good: The translucency and shade had gradations, faithfully reproducing an appearance similar to that of natural teeth as though dentin is present underneath enamel and influencing appearance

Moderate: The translucency and shade had gradations; however, the zirconia sintered bodies did not look as though dentin is present underneath enamel, failing to faithfully reproduce an appearance similar to that of natural teeth
Poor: The translucency and shade had not gradations, failing to reproduce an appearance similar to that of natural teeth

Examples 1 to 5 and Comparative Examples 1 and 2

In Examples 1 to 5, the zirconia sintered bodies all showed a gradation with gradually decreasing translucency and darker shades from a region corresponding to the layer including one end P (a first layer, corresponding to the incisal region) to a region corresponding to the layer including the other end Q of the to-be-processed body for dentistry 10 shown in FIG. 1 (a layer corresponding to the cervical region). With the multilayer structure, the zirconia sintered bodies of Examples 1 to 5 had an appearance indistinguishable from natural teeth by faithfully reproducing an appearance based on the structure of natural teeth as though dentin is present underneath enamel and influencing appearance. The zirconia sintered bodies that were determined as "Good" in the evaluation were found to be reproducing the perception of lightness, particularly from the incisal region to the intermediate layer, even when seen from a close distance.

In Comparative Example 1 corresponding to Patent Literature 1, the zirconia sintered body showed a gradation with gradually decreasing translucency and darker shades from a region corresponding to the layer including one end P to a region corresponding to the layer including the other end Q of the to-be-processed body for dentistry 10 shown in FIG. 1. However, it was not possible to say that the zirconia sintered body looked as though dentin was present underneath enamel, and that the multilayer structure was faithfully reproducing an appearance based on the structure of natural teeth. That is, it was not possible to say that the zirconia sintered body had an appearance indistinguishable from natural teeth. In Comparative Example 2, the translucency and shade were uniform from one end P to the other end Q, and it was not possible to say that the zirconia sintered body had an appearance similar to that of natural teeth.

Shade Evaluation of Zirconia Sintered Body

For the measurement of the shade of each layer in the zirconia sintered body of each Example and Comparative Example, a zirconia sintered body was individually prepared for each layer using the method below, and was measured for (L*,a*,b*) according to L*a*b* color system (JIS Z 8781-4:2013 Color Measurements - Part 4: CIE 1976 L*a*b* color space).

First, a molded body was prepared with the raw material powder of each layer of Examples and Comparative Examples by pressing the raw material powder in a size pre-adjusted to obtain a zirconia sintered body 1.2 mm thick. The molded body was fired at 1,000°C for 2 hours to prepare a zirconia pre-sintered body. The zirconia pre-sintered body was fired at 1,550°C for 120 minutes to prepare a zirconia sintered body. The zirconia sintered body was polished with #600 abrasive paper on both surfaces to obtain a zirconia sintered body having a thickness of 1.2 mm. The shade was then measured against a black background using a spectrophotometer CM-3610A (manufactured by Konica Minolta Japan Inc.) with a D65 illuminant in measurement mode SCI, with a measurement area/illumination area of 8 mm/11 mm in diameter.

As can be seen from Table 1, the zirconia sintered bodies of Examples 1 to 5 had L* values that increased from the uppermost layer (layer 1) to the intermediate layer (layer 2), and decreased from the intermediate layer to the lowermost layer (layer 3 in Examples 1 to 3 and 5; layer 4 in Example 4), showing the L* behavior with which an appearance similar to that of natural teeth can be faithfully reproduced as though dentin is present underneath enamel and influencing appearance. In contrast, in the zirconia sintered body of Comparative Example 1, L* consistently decreased from the uppermost layer (layer 1) to the lowermost layer (layer 3), and did not show the L* behavior with which the appearance of natural teeth can be faithfully reproduced. In Comparative Example 2, L* was constant because of the monolayer structure of the zirconia sintered body, and did not show the L* behavior with which the appearance of natural teeth can be faithfully reproduced.

Measurement of Flexural Strength of Zirconia Sintered Body

The raw material powder for layer 4 of Example 4 was used to prepare a zirconia pre-sintered body by the method of production of pre-sintered body described above, and the zirconia pre-sintered body was fired at 1,550°C for 120 minutes to obtain a zirconia sintered body. The zirconia sintered body was measured for flexural strength according to ISO 6872:2015 using a sample measuring 1.2 mm × 4.0 mm × 16.0 mm in size, with the distance between supports (span) set at 12 mm, and the crosshead speed set to 0.5 mm/min. The flexural strength was 1,150 MPa, a strength needed for the cervical region of a dental prosthesis.

The numeric ranges given in this specification should be construed such that all numerical values and ranges falling within the ranges specified herein are specifically recited in the specification, even in the absence of specific

**EP 4 218 665 A1**

recitations.

INDUSTRIAL APPLICABILITY

A to-be-processed body for dentistry of the present invention can be used to prepare dental products, such as dental prostheses (for example, prostheses for front teeth).

Reference Signs List

10   To-be-processed body for dentistry
P    One end
Q    Other end
X    Entire length
Y    First direction
A    First point
B    Third point
C    Second point

**Claims**

1. A to-be-processed body for dentistry for preparing a dental prosthesis, the to-be-processed body for dentistry satisfying L3 > L1 and L3 > L2 on a straight line extending along a first direction from one end P to the other end Q of the to-be-processed body for dentistry, where:

    L1 is the final L* according to L*a*b* color system over a black background at a first point lying in an interval from said one end P to 25% of the entire length,
    L2 is the final L* according to L*a*b* color system over a black background at a second point lying in an interval from said other end Q to 25% of the entire length, and
    L3 is the final L* according to L*a*b* color system over a black background at a third point lying between the first point and the second point on a straight line connecting the first point to the second point.

2. The to-be-processed body for dentistry according to claim 1, wherein L3 - L1 is 0.2 or more and 5.0 or less, and L3 - L2 is 0.2 or more and 4.0 or less.

3. The to-be-processed body for dentistry according to claim 1 or 2, wherein:

    the final L* according to L*a*b* color system over a black background shows a pattern of increase from the first point toward the third point, and
    the final L* according to L*a*b* color system over a black background shows a pattern of decrease from the third point toward the second point.

4. The to-be-processed body for dentistry according to any one of claims 1 to 3, wherein:

    there exists no interval in which the final L* according to L*a*b* color system over a black background decreases by 0.5 or more from the first point toward the third point, and
    there exists no interval in which the final L* according to L*a*b* color system over a black background increases by 0.5 or more from the third point toward the second point.

5. The to-be-processed body for dentistry according to any one of claims 1 to 4, wherein:

$$a1 < a3 < a2,$$

    and

$$b1 < b3 < b2,$$

where:

    a1 and b1 are the final a* and b*, respectively, at the first point according to L*a*b* color system over a black background,
    a2 and b2 are the final a* and b*, respectively, at the second point according to L*a*b* color system over a black background, and
    a3 and b3 are the final a* and b*, respectively, at the third point according to L*a*b* color system over a black background.

6. The to-be-processed body for dentistry according to any one of claims 1 to 5, which is a multilayer structure comprising a layered structure of at least three layers of different compositions.

7. The to-be-processed body for dentistry according to claim 6, wherein the multilayer structure is disc-shaped or prism-shaped.

8. The to-be-processed body for dentistry according to claim 6 or 7, wherein said at least three layers of different compositions are a layer including the first point, a layer including the second point, and a layer including the third point.

9. The to-be-processed body for dentistry according to any one of claims 1 to 8, which is a zirconia molded body or zirconia pre-sintered body comprising zirconia, and a stabilizer capable of reducing a phase transformation of zirconia.

10. The to-be-processed body for dentistry according to claim 9, wherein the zirconia is predominantly monoclinic in crystal system.

11. The to-be-processed body for dentistry according to claim 9 or 10, wherein at least a part of the stabilizer is not dissolved in zirconia as a solid solution.

12. The to-be-processed body for dentistry according to any one of claims 1 to 11, which comprises at least two layers that are substantially the same in the content of the stabilizer relative to the total mole of the zirconia and the stabilizer.

13. The to-be-processed body for dentistry according to claim 12, wherein the layers that are substantially the same in the content of the stabilizer all comprise a color component, and differ from one another in the composition of the color component.

14. The to-be-processed body for dentistry according to any one of claims 9 to 13, which comprises at least two layers that differ from one another in the content of the stabilizer relative to the total mole of the zirconia and the stabilizer.

15. The to-be-processed body for dentistry according to any one of claims 9 to 13, wherein the content of the stabilizer relative to the total mole of the zirconia and the stabilizer is substantially the same in all layers.

16. The to-be-processed body for dentistry according to any one of claims 9 to 15, wherein the stabilizer is yttria.

17. The to-be-processed body for dentistry according to claim 16, wherein:

    the content of yttria in the layer including said one end P is 3.5 mol% or more and 6.5 mol% or less relative to the total mole of the zirconia and the yttria,
    the content of yttria in the layer including said other end Q is 2.5 mol% or more and less than 4.5 mol% relative to the total mole of the zirconia and the yttria, and
    the layer including said one end P has a higher yttria content than the layer including said other end Q.

FIG.1

## INTERNATIONAL SEARCH REPORT

| International application No. |
| --- |
| **PCT/JP2021/035170** |

| A. CLASSIFICATION OF SUBJECT MATTER |
| --- |
| *A61C 13/083*(2006.01)i; *C04B 41/87*(2006.01)i; *C04B 41/89*(2006.01)i; *C04B 35/486*(2006.01)i; *A61C 5/77*(2017.01)i <br> FI:  A61C13/083; A61C5/77; C04B35/486; C04B41/89 Z; C04B41/87 Z |
| According to International Patent Classification (IPC) or to both national classification and IPC |

| B. FIELDS SEARCHED |
| --- |
| Minimum documentation searched (classification system followed by classification symbols) <br> A61C13/083; C04B41/87; C04B41/89; C04B35/486; A61C5/77 |
| Documentation searched other than minimum documentation to the extent that such documents are included in the fields searched <br> Published examined utility model applications of Japan 1922-1996 <br> Published unexamined utility model applications of Japan 1971-2021 <br> Registered utility model specifications of Japan 1996-2021 <br> Published registered utility model applications of Japan 1994-2021 |
| Electronic data base consulted during the international search (name of data base and, where practicable, search terms used) |

| C. DOCUMENTS CONSIDERED TO BE RELEVANT | | |
| --- | --- | --- |
| Category* | Citation of document, with indication, where appropriate, of the relevant passages | Relevant to claim No. |
| A | WO 2016/104724 A1 (KURARAY NORITAKE DENTAL INC.) 30 June 2016 (2016-06-30) <br> entire text, all drawings | 1-17 |
| A | WO 2014/181828 A1 (KURARAY NORITAKE DENTAL INC.) 13 November 2014 (2014-11-13) <br> entire text, all drawings | 1-17 |
| A | WO 2018/230657 A1 (KURARAY NORITAKE DENTAL INC.) 20 December 2018 (2018-12-20) <br> entire text, all drawings | 1-17 |
| A | JP 2020-109069 A (YAMAKIN CO., LTD.) 16 July 2020 (2020-07-16) <br> entire text, all drawings | 1-17 |
| A | US 2006/0008774 A1 (ORTH, Ulrich) 12 January 2006 (2006-01-12) <br> entire text, all drawings | 1-17 |

| ☐ Further documents are listed in the continuation of Box C. | ☑ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **16 November 2021** | **30 November 2021** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**
**Information on patent family members**

International application No.

**PCT/JP2021/035170**

| Patent document cited in search report | | | Publication date (day/month/year) | Patent family member(s) | | | Publication date (day/month/year) |
|---|---|---|---|---|---|---|---|
| WO | 2016/104724 | A1 | 30 June 2016 | US | 2018/0002235 | A1 | |
| | | | | EP | 3246300 | A1 | |
| | | | | CN | 107108373 | A | |
| WO | 2014/181828 | A1 | 13 November 2014 | US | 2016/0074142 | A1 | |
| | | | | EP | 2995434 | A1 | |
| | | | | CN | 105189067 | A | |
| WO | 2018/230657 | A1 | 20 December 2018 | (Family: none) | | | |
| JP | 2020-109069 | A | 16 July 2020 | (Family: none) | | | |
| US | 2006/0008774 | A1 | 12 January 2006 | EP | 1614396 | A1 | |
| | | | | DE | 102004033248 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019131782 A
- JP 2017185163 A
- JP 2020058648 A